Europäisches Patentamt

European Patent Office

Office européen des brevets

(11) Publication number: **0 233 318 B1**

# EUROPEAN PATENT SPECIFICATION

(45) Date of publication of patent specification: **05.02.92**   (51) Int. Cl.⁵: **B65B  51/30**

(21) Application number: **86114141.4**

(22) Date of filing: **13.10.86**

(54) Apparatus for sealing packages.

(30) Priority: **30.10.85 JP 165834/85 U**

(43) Date of publication of application:
**26.08.87 Bulletin  87/35**

(45) Publication of the grant of the patent:
**05.02.92 Bulletin  92/06**

(84) Designated Contracting States:
**DE FR GB IT**

(56) References cited:
**EP-A- 142 052**
**NL-A- 7 302 380**
**US-A- 4 512 138**

(73) Proprietor: **YOSHIDA KOGYO K.K.**
**No. 1 Kanda Izumi-cho Chiyoda-ku**
**Tokyo(JP)**

(72) Inventor: **Yokoe, Kazuo**
**164-11, Inuyama**
**Kurobe-Shi Toyama-Ken(JP)**

(74) Representative: **Casalonga, Axel et al**
**BUREAU D.A. CASALONGA - JOSSE Moras-**
**sistrasse 8**
**W-8000 München 5(DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates generally to the packaging of articles with a wrapping material, and more particularly to an apparatus for making an end seal on a package formed from a web of thermoplastic sheet material.

Japanese Patent Laid-open Publication No. 60-45118 published on March 11, 1985 discloses an apparatus for binding together a multiplicity of elongate articles by means of a pair of thermoplastic binding webs or strips. The disclosed apparatus comprises a combined ultrasonic welder-cutter including a pair of opposed welding heads, one of which has an integral cutting ridge for simultaneously cutting both webs while also fastening together the webs at opposite sides of the line of severance. Since the cutting ridge is fixed and not adjustable in height, a problem would occur when bundling the articles with binding webs of non-uniform thicknesses. More specifically, when the overlapped webs jointly have a thickness smaller than the height of the cutting ridge, the cutting ridge penetrates the webs before the opposed welding heads force the webs into mutual sealing engagement with each other. On the other hand, only an incomplete cutting is effected when the thickness of the doubled webs is larger than the height of the cutting ridge. Furthermore, due to the integral formation, the cutting ridge is heated to the same temperature as the welding heads with the result that fused web material tends to stick to the cutting edge. With this sticky or dirty cutting edge, a clear line of severance cannot be created.

NL-A-7 302 300 discloses an apparatus for sealing by closing a thermoplastic package comprising a heat sealing head which is fixedly secured to the body of the apparatus. The sealing head has a deep slit into which a knife blade mounted on a movable jaw may penetrate for severing the thermoplastic web.

EP-A-142 052 discloses an apparatus in accordance with the first part of claim 1 for sealing by closing a thermoplastic package having a heat sealing head with a cut off blade which is spring biased. A pressing jaw is urged by a compression spring toward the heat sealing head.

The pressing jaw has a slot for receiving the blade when said blade is actuated together with the heat sealing head toward the pressing jaw.

The present invention seeks to provide an apparatus having a combined heat-sealing and cutting unit having structural features which make it possible to provide a pair of end seals on opposite sides of a clean line of severance even when subjected to a change in thickness of a packaging web of thermoplastic sheet material.

As claimed, the apparatus for making an end seal on a package formed from a web of thermoplastic sheet material of the present invention comprises a heat sealing unit and a cutting unit.

The heat sealing unit includes a pair of opposed sealing heads secured to a pair of opposed slide arms for relative reciprocating movement toward each other. Each said sealing head has a pair of spaced sealing lands engageable with the web to fuse an overlapping region of said web along a pair of spaced portions and a channel between said sealing lands.

The cutting unit is associated with the first of said sealing heads at the front end of the first slide arm. It includes a knife blade reciprocally movable through said channel of said first sealing head into the channel of the second sealing head for severing the web along a non-fused intermediate portion after said opposed sealing heads have been brought into mutual sealing engagement. Actuating means for said knife blade are also provided. A presser block is associated with the second of said sealing heads and urged toward said first sealing head by a compression spring According to the invention, the first sealing head has a generally L-shaped open recess connected at its one end to said channel and adapted for slidably receiving a stem secured perpendicularly on said knife blade and projecting outwardly from said recess for cooperating with said actuating means, said stem being engageable with the edges of said recess to limit the reciprocating movement of said knife blade. The presser block is slidably received in a recessed front end portion of said second sealing head. The presser block includes a stopper lug projecting laterally outwardly from said recessed front end portion and engageable with said second slide arm to limit the sliding movement of said presser block.

Many other advantages, features and objects of the present invention will become manifest to those versed in the art upon making reference to the detailed description and the accompanying sheets of drawings in which a preferred structural embodiments incorporating the principles of the present invention is shown by way of illustrative example.

Figure 1 is a fragmentary perspective view, partly in cross section, of an apparatus embodying the present invention;

Figure 2 is a perspective view of a knife blade of the apparatus shown in Figure 1;

Figure 3 is a perspective view of a modified knife blade;

Figure 4 is a schematic perspective view showing an example of elongate articles bundled together on the apparatus shown in Figure 1;

Figures 5A through 5C are schematic views showing the sequence of bundling steps according to the present invention;

Figures 6 and 7A through 7C are views illustrating a successive steps of operation of the apparatus shown in Figure 1;

Figures 8 and 9 are schematic perspective views respectively showing examplified packages produced on the apparatus of Figure 1.

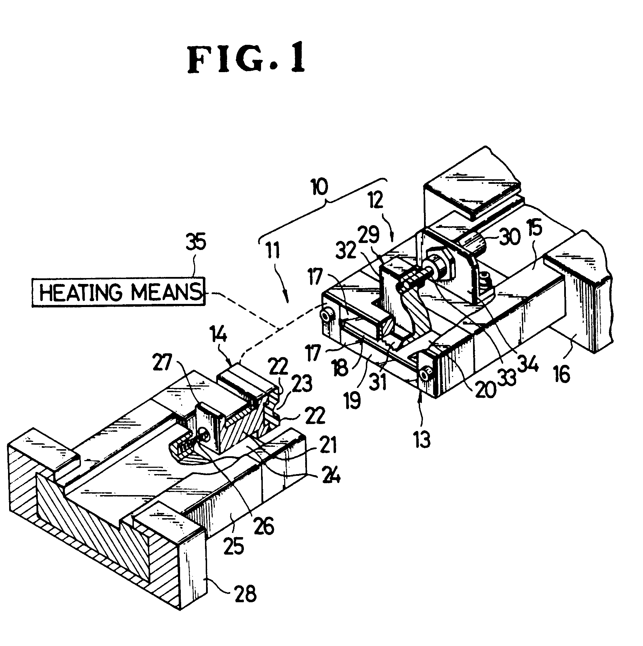

The present invention is particularly useful when embodied in a package-sealing apparatus such as shown in Figure 1, generally indicated by the reference numeral 10.

The apparatus 10 generally comprises a heat-sealing unit 11 and a cutting unit 12 associated with one of a pair of horizontally opposed sealing heads 13, 14 of the heat-sealing unit 11.

The first sealing head 13 comprises a rectangular plate detachably connected to a front end of a first slide arm 15 by means of a pair of screws (not designated). The slide arm 15 is slidably mounted on a first guide block 16 secured to a non-illustrated frame of the apparatus 10. The sealing head 13 includes a pair of parallel spaced sealing lands 17 extending horizontally across the face thereof, and an elongate central aperture or channel 18 defined between the sealing lands 17. Each of the sealing lands 17 has a front surface coated with a film 19 of fluorine plastics. The slide arm 15 includes a generally L-shaped recess 20 for purposes described below. The recess 20 has one end connected with the channel 18 and the other end opening to an upper surface of the slide arm 15.

The second sealing head 14 comprises a generally rectangular block of fluorine plastics and is fastened to a front end of a presser block 21 via a dovetail joint. The second sealing head 14 includes a pair of parallel spaced sealing lands 22, 22 extending horizontally across the face thereof, and a central channel 23 defined between the lands 22. The presser block 21 is slidably received in a recessed front end portion 24 of a second slide arm 25 and is slidably movable toward and away from the first sealing head 13 for a limited distance. A compression coil spring 26 is disposed between and acts between the slide arm 25 and the presser block 21 to urge the latter and hence the sealing head 14 toward the first sealing head 13. The presser block 21 has a stopper lug 27 disposed on a rear end thereof and projecting upwardly outwardly from the recessed portion 24. The stopper lug 27 is engageable with the slide arm 25 to limit reciprocating movement of the presser block 21. The slide arm 25 is slidably mounted on a second guide block 28 secured to the frame of the apparatus 10. The first and second slide arms 15, 28 are operatively connected with a suitable drive means, not shown, and they are driven by the drive means to move relatively toward and away from each other.

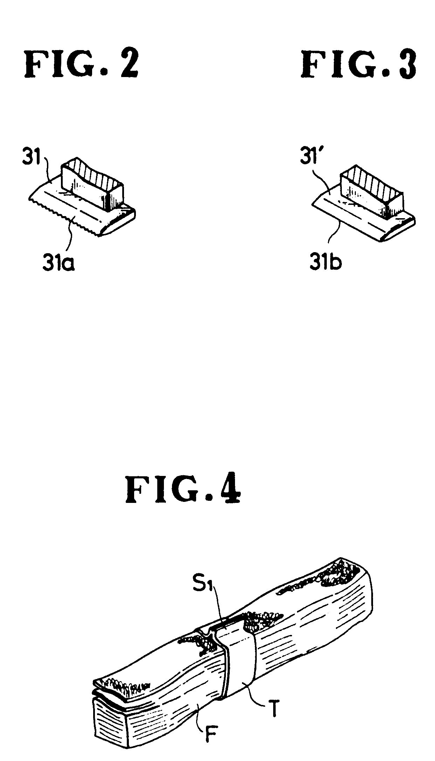

The cutting unit 12 includes a generally L-shaped cutting knife 29 reciprocably received in the recess 20 in the first slide arm 15, and an actuator 30 mounted on the slide arm 15 for reciprocating the cutting knife 29. The cutting knife 29 includes a horizontal knife blade 31 movable through the channel 18 in the sealing head 13, and a vertical stem 32 projecting upwardly outwardly from the recess 20. The actuator 30 comprises a fluid-actuated cylinder, such as an air cylinder having a piston rod 33 connected to the stem 32 of the cutting knife 29. The cylinder 30 is supported by a bracket 34 secured to the slide arm 15. As shown in Figure 2, the knife blade 31 has a tapered, notched cutting edge 31a. As an alternative, it is possible to use a knife blade 31' having a tapered, continuous cutting edge 31b, as shown in Figure 3.

At least one of the sealing heads 13, 14 is heated to a desired temperature by means of a suitable heating means 35 (Figure 1), such as an electric resistance heating element generally composed of a nichrome wire, a high-frequency heating element, or an ultrasonic heating element. In case the high-frequency heating element is used, the electric supply to the heating element is interrupted when the cutting unit 12 is being actuated to sever the webs.

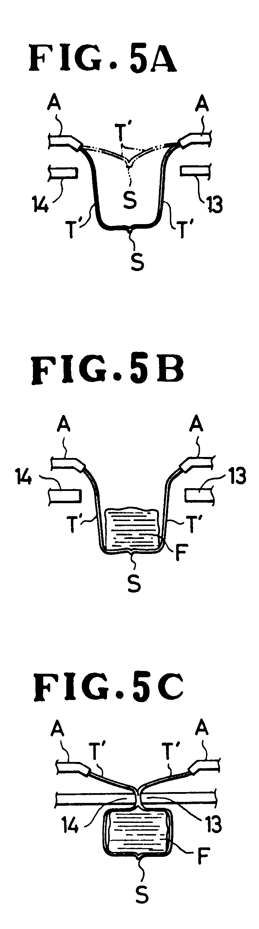

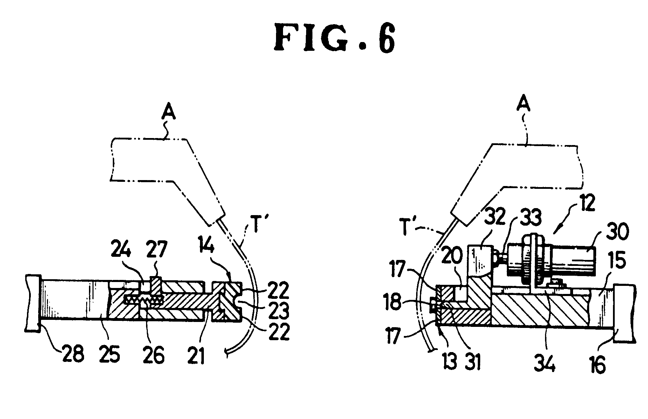

Preferably, the package-sealing apparatus 10 thus constructed is incorporated in a packaging or binding machine for fastening together a desired number of elongate articles F by a pair of binding strips or webs T, as shown in Figures 5A - 5C, 6 and 7A - 7C. The binding machine includes a pair of opposed tape feeders A, A disposed above the respective sealing heads 13, 14 of the apparatus 10 for supplying a pair of continuous binding tapes T' downwardly toward the apparatus 10 across the path of movement of the sealing heads 13, 14. As shown in Figure 4, the elongate articles F to be fastened together comprise surface-type fastener tapes generally known as loop-and-hook fastener tapes. The binding tapes T' are made of thermoplastic synthetic resin, such as polyester, polyethylene, nylon or polyvinyl chloride. It is also possible to use a composite sheet material such as a resin-laminated paper or a resin-laminated aluminum foil which is composed of a non-resin substrate or web and a thermoplastic synthetic resin film overlying the web. In the latter case, a multi-layer seal is formed between the thermoplastic synthetic resin films.

Operation of the package-sealing apparatus 10 is described below with reference to Figures 5A - 5C, 6 and 7A - 7C. The apparatus 10 is operatively connected with the binding machine to move in timed relation to the tape feeders A, A and a non-illustrated fastener feeder of the binding machine.

As shown in Figure 5A, a pair of continuous thermoplastic binding tapes T', T', with their leading ends S fused together, is fed by the respective tape feeders A, A to extend downwardly through the path of movement of the sealing heads 13, 14 so that predetermined lengths of the respective binding tapes T', T' jointly take an untensioned gravity-formed upwardly open U-shape between the sealing heads 13, 14.

Then a desired number of the fastener tapes F are supplyed from the tape feeder, not shown, onto the U-shaped lengths of the binding tapes T', T', as shown in Figure 5B.

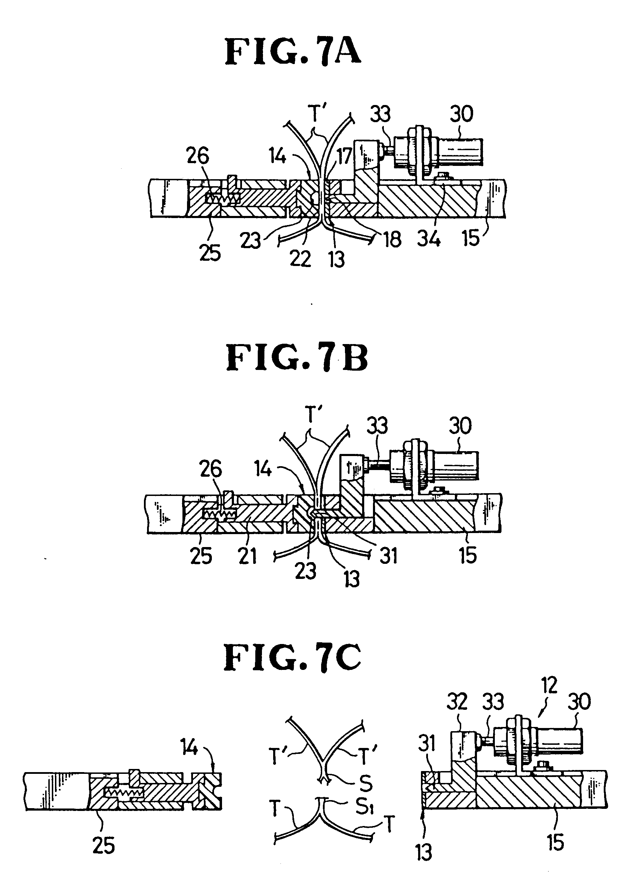

Thereafter, the slide arms 15, 25 are actuated to move toward each other to grip the binding tapes T', T' by and between the sealing heads 13, 14, thereby enbracing the fastener tapes F with the lengths of the binding tapes T', as shown in Figure 5C. In this instance, as shown in Figure 7A, the sealing lands 17, 22 of the respective sealing heads 13, 14 are held into abutment with an overlapping region of the tapes T'. Since the sealing heads 13, 14 are heated to a desired processing temperature by the heating means 35 (Figure 1), the thermoplastic binding tapes T' are fused together along their portions extending in registry with the lands 17, 22 so that two vertically spaced joined portions or seals are formed between the binding tapes T', one on each side of a non-fused intermediate portion of the overlapping region extending in registry with the channels 18, 23 in the respective sealing heads 13, 14. During that time, the compression coil spring 26 continuously exerts a back tension or pressure on the presser block 21 to ensure that the binding tapes T' are brought into mutual sealing engagement with each other by and between the sealing head 13 and the spring-loaded sealing head 14. The spring 26 also functions to absorb a shock force applied thereto when the knife blade 31 abuts against the sealing head 14.

While keeping this condition, the cylinder 30 is actuated to extend its piston rod 33 whereupon the knife blade 31 is moved to project outwardly from the sealing head through the channel 18 (Figure 7A) into the channel 23 in the sealing head 14, thereby severing the binding tapes T' along the non-fused intermediate portion of the overlapping region of the tapes T'. Since the knife blade 31 is thermally isolated from the heated sealing heads 13, 14, a clean line of serverance can be created without causing a build-up of melted synthetic resin on the knife blade 31.

Then the cylinder 30 is actuated to return the knife blade 31 to its initial retracted position, and finally the slide arms 15, 25 are moved rearwardly away from each other, as shown in Figure 7C. The latter movement effects a dual seal one of which becames a trailing end seal S₁ on a bundle of the fastener tapes F (Figure 4) and the other becomes a leading end seal for the next bundle. The bundled fastener tapes F thus released falls on a container, not shown. The fluorine plastic films 19 overlying the respectve sealing lands 17 of the sealing head 13 and the sealing head 14 molded of fluorine plastics make it posssible to smoothly separate the binding tapes T, T' from the sealing heads 13, 14 without sticking on the latter.

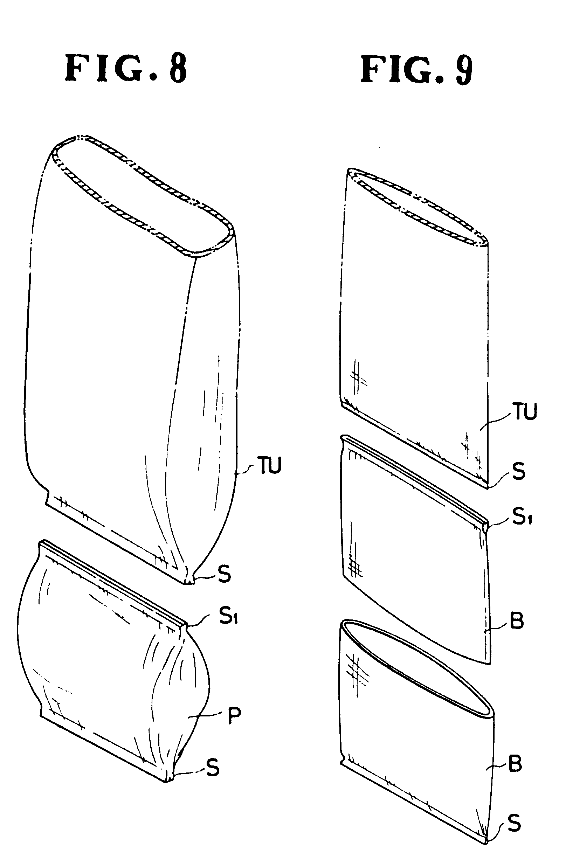

The package-sealing apparatus 10 of the present invention is also suitable for continuous sealing of packages made on a form and fill packaging machien. In such machine, as shown in Figure 8, a web of thermoplastic packaging film TU is formed into a tubular configuration. The formed tube of packaging film TU has an end seal S made transversely thereacross by the apparatus 10. After product is inserted into the tube TU, another end seal S₁ is made and a filed package P is severed by the apparatus 10. At the same time, a leading end seal S for the next package is formed.

Figure 9 shows two open wrapping tubes B, B with one end S closed by the apparatus 10. For making the tubes B, an empty tubular packaged similar to the package P shown in Figure 8, is severed transversely across an intermediate portion thereof.

## Claims

1. An apparatus for making an end seal on a package formed from a web of thermoplastic sheet material, said apparatus comprising :
   - a heat sealing unit (11) including a pair of opposed sealing heads (13, 14) secured to a pair of opposed slide arms (15, 25) for relative reciprocating movement toward each other, each said sealing head having a pair of spaced sealing lands (17, 22) engageable with the web to fuse an overlapping region of said web along a pair of spaced portions and a channel (18, 23) between said sealing lands;
   - a cutting unit (12) associated with the first of said sealing heads at the front end of the first slide arm (15), including a knife blade (31) reciprocally movable through said channel (18) of said first sealing head (13) into the channel (23) of the second sealing head (14) for severing the web along a non-fused intermediate portion after said opposed sealing heads (13, 14) have been brought into mutual sealing engagement, and actuating means (30) for said knife blade (31),
   - a presser block (21) associated with the second (14) of said sealing heads and urged toward said first sealing head (13) by a compression spring (26) characterized in that said first sealing head (13) has a generally L-shaped open recess (20) connected at its one end to said channel (18) and adapted for slidably receiving a stem (32) secured perpendicularly on said knife blade and projecting outwardly from said recess (20) for cooperating with said actuating means (30), said stem (32) being engageable with the edges of said recess to limit the reciprocating movement of said knife blade (31); and said presser block (21) is slidably received in a recessed front end portion (24) of said second sealing head (14), said presser block (21) including a stopper lug (27) projecting laterally outwardly from said recessed front end portion (24) and engageable with said second slide arm (25) to limit the sliding movement of said presser block (21).

2. An apparatus according to claim 1, said cutting unit (12) including a fluid-actuated cylinder (30) fixedly mounted on said first slide arm (15) and having a piston rod (33) connected to said stem(32).

3. An apparatus according to claims 1, or 2 said second sealing head (14) being floatingly supported on a front end of the second slide arm (25).

4. An apparatus according to any preceding claim, said actuating means comprising a fluid-actuated cylinder (30).

**Revendications**

1. Appareil pour effectuer un scellage d'extrémité sur un paquet formé à partir d'une bande d'un matériau en feuille thermoplastique, ledit appareil comprenant :
   - un dispositif de scellage à chaud (11) comprenant une paire de têtes de scellage opposées (13,14) fixées à une paire de bras coulissants (15,25) en vue d'un mouvement de va-et-vient relatif en direction l'une de l'autre, chacune desdites têtes comportant une paire de surfaces d'appui ou zones de scellage espacées (17,22) pouvant venir en contact avec la bande pour faire fusionner une région en chevauchement de ladite bande le long d'une paire de parties espacées et une rainure (18,23) entre lesdites zones de scellage ;
   - un dispositif de coupe (12) associé à la première desdites têtes de scellage à l'extrémité avant du premier bras coulissant (15), comprenant une lame de coupe (31) pouvant être déplacée suivant un mouvement de va-et-vient à travers ladite rainure (18) de la première tête de scellage, dans la rainure (23) de la seconde tête de scellage (14) pour sectionner la bande le long d'une partie intermédiaire, n'ayant pas fusionnée, après que lesdites têtes de scellage opposées (13,14) ont été amenées en contact mutuel de scellage et un moyen d'actionnement (30) pour ladite lame de coupe (31), un bloc presseur (21) associé à la seconde (14) desdites têtes de scellage et poussé en direction de ladite première tête de scellage (13) par un ressort de compression (26), caractérisé en ce que la première tête de scellage (13) comporte un évidement ouvert (20) en forme de L d'une façon générale et raccordé à une de ses extrémités à ladite rainure (18) et adapté pour loger de façon coulissante une tige (32) fixée perpendiculairement à ladite lame de coupe et faisant saillie vers l'extérieur depuis l'évidement (20) pour coopérer avec ledit moyen d'actionnement (30), ladite tige (32) pouvant venir en contact avec les bords dudit évidement pour limiter le mouvement de va-et-vient de ladite lame de coupe (31); et ledit bloc presseur (21) est logé de façon coulissante dans une partie d'extrémité avant évidée (24) de ladite seconde tête de scellage (14), ledit bloc presseur (21) comprenant une butée d'arrêt (27) faisant saillie latéralement vers l'extérieur depuis la partie d'extrémité avant évidée (24) et pouvant venir en contact avec ledit second bras coulissant (25) pour limiter le coulissement dudit bloc presseur (21).

2. Apparreil selon la revendication 1, le dispositif de coupe (12) comprenant un vérin (30) actionné par un fluide, monté fixement sur ledit premier bras coulissant (15) et comportant une tige (33) de piston reliée à ladite tige (32).

3. Appareil selon les revendications 1 ou 2, ladite seconde tête de scellage (14) étant supportée de façon flottante par l'extrémité avant du second bras coulissant (25).

4. Appareil selon l'une quelconque des revendications précédentes, ledit moyen d'actionnement comprenant un vérin (30) actionné par un fluide.

## Patentansprüche

1. Vorrichtung zum Herstellen einer Endversiegelung an einer aus einem Streifen eines thermoplastischen Flächenmaterials gebildeten Packung, wobei die Vorrichtung enthält:

  - eine Wärmeversiegelungseinheit (11) enthaltend ein Paar von gegenüberliegenden Versiegelungsköpfen (13,14), die zur gegenseitig hin- und hergehenden Bewegung in Richtung aufeinander an einem Paar von gegenüberliegenden Schiebearmen (15,25) befestigt sind, wobei jeder Versiegelungskopf ein Paar von zum Schweißen eines überlappenden Bereichs des Streifens entlang einem Paar von beabstandeten Bereichen mit dem Streifen in Kontakt bringbaren beabstandeten vorspringenden Versiegelungsflächen (17,22) und einen Kanal (18,23) zwischen den vorspringenden Versiegelungsflächen aufweist;
  - eine dem ersten der Versiegelungsköpfe zugeordnete Schneideeinheit (12) am vorderen Ende des ersten Schiebearms (15), die ein durch den Kanal (18) des ersten Versiegelungskopfes (13) hindurch in den Kanal (23) des zweiten Versiegelungskopfes (14) hinein hin- und hergehend bewegliches Messerblatt (31) zum Durchtrennen des Streifens entlang eines nicht verschweißten Zwischenbereichs, nachdem die gegenüberliegenden Versiegelungsköpfe (13,14) in einen gegenseitigen versiegelnden Kontakt gebracht worden sind, enthält, sowie eine Betätigungseinrichtung (30) für das Messerblatt (31);
  - einen Druckblock (21), der dem zweiten (14) der Versiegelungsköpfe zugeordnet ist und mittels einer Druckfeder (26) in Richtung auf den ersten Versiegelungskopf (13) gezwungen wird;

  **dadurch gekennzeichnet,**

  daß der erste Versiegelungskopf (13) eine allgemein L-förmige offene Aussparung (20) aufweist, die an ihrem einen Ende mit dem Kanal (18) verbunden und zur gleitenden Aufnahme eines rechtwinklig an dem Messerblatt befestigten und zum Zusammenwirken mit der Betätigungseinrichtung (30) von der Aussparung (20) nach außen vorspringenden Schaftes (32) ausgebildet ist, wobei der Schaft (32) zum Begrenzen der hin- und hergehenden Bewegung des Messerblattes (31) mit den Rändern der Aussparung in Anschlag bringbar ist; und

  daß der Druckblock (21) gleitend in einem ausgesparten vorderen Endbereich (24) des zweiten Versiegelungskopfes (14) aufgenommen ist, wobei der Druckblock (21) einen von dem ausgesparten vorderen Endbereich (24) lateral nach außen vorspringenden und mit dem zweiten Schiebearm (25) in Anschlag bringbaren Stoppansatz (27) aufweist, um die gleitende Bewegung des Druckblocks (21) zu begrenzen.

2. Vorrichtung nach Anspruch 1, bei der die Schneideeinheit (12) einen fluid-betätigten Zylinder (30) enthält, der an dem ersten Schiebearm (15) fest angebracht ist und eine mit dem Schaft (32) verbundene Kolbenstange (33) aufweist.

3. Vorrichtung nach Anspruch 1 oder 2, bei der der zweite Versiegelungskopf (14) an einem vorderen Ende des zweiten Schiebearms (25) schwimmend gehalten ist.

4. Vorrichtung nach einem der vorhergehenden Ansprüche, bei der die Betätigungseinrichtung einen fluid-betätigten Zylinder (30) umfaßt.

# FIG.1

HEATING MEANS

# FIG. 2

31
31a

# FIG. 3

31'
31b

# FIG. 4

$S_1$

F

T

# FIG. 5A

# FIG. 5B

# FIG. 5C

# FIG.6

# FIG. 7A

# FIG. 7B

# FIG. 7C

# FIG. 8

# FIG. 9